# EUROPEAN PATENT SPECIFICATION

(11) **EP 1 936 946 B1**
(45) Date of publication and mention of the grant of the patent: **19.06.2019**
(21) Application number: 07023580.9
(22) Date of filing: 05.12.2007
(51) Int. Cl.: H04N 1/32

(54) **Data processor**
Datenprozessor
Processeur de données

(30) Priority: 22.12.2006 JP 2006346351; 07.09.2007 JP 2007232313
(43) Date of publication of application: 25.06.2008
(73) Proprietor: Brother Kogyo Kabushiki Kaisha, Nagoya, Aichi 467-8561 (JP)
(72) Inventor: Takahata, Hirotsugu, Nagoya Aichi 467-8561 (JP)
(74) Representative: Kuhnen & Wacker Patent- und Rechtsanwaltsbüro PartG mbB

(56) References cited:
- WO-A-2006/073913
- JP-A- 2002 259 205
- JP-A- 2005 236 345
- US-A1- 2004 190 061
- US-A1- 2005 254 072

## Description

This disclosure relates to a data processor.

Conventionally, an image reading device having a function of storing image data obtained by reading an original by a scanner portion into a removable memory connected to the device has been known.

In such an image reading device, when there is no free space in a removable memory, there arises a disadvantage that a read image data cannot be stored and so on. As a measure for this, it can be assumed that, for example, the read image data is transferred to a hard disk or the like of a server computer connected through a network while the attempt to store the image data in the removable memory is given up. However, in this case, a problem may occur that, even though a user later references contents of the removable memory, the user cannot find where the image data is stored since the image data has not been stored there.

From JP 2005-236345 A there is known a digital camera provided with a memory card for recording photographed images. The camera attaches an ID to an image to be stored in the memory card, transmits the ID and the image to an image management server, and stores a thumbnail image of the image ID in the memory card. When the image is displayed or printed by the camera, the image ID is used to receive the image data from the server.

From JP 2002-259205 A there is known an image processor having at least two optional functions among a print function, scan function, image storage function, facsimile transmitting and receiving function and stored image extraction function. The image processor is provided with an image memory used at the time of realizing each function including temporary storage of image data, a network interface card that connects to a network and a CPU for calculating a minimum necessary memory to realize each function at the time of starting each function and secures the minimum memory on the image memory in each function. The image processor secures an available memory area on other devices on the network with respect to each function when memory capacity surpassing the image memory is needed according to a memory use request of the function.

In view of the above described circumstances, there is a need for a technology which allows the amount of usage of a removable memory to be suppressed or allows stored data to be easily obtained in a data processor.

The object of the invention is attained by a data processor according to claim 1. Further developments of the invention are indicated in the dependent claims. Illustrative aspects in accordance with the invention will be described in detail with reference to the following figures wherein:
FIG. 1 is an external perspective view of a multifunction apparatus according to an aspect of the present invention;
FIG. 2 is a block diagram which schematically shows an electrical structure of the multifunction apparatus;
FIG. 3 is a flowchart of a scanning process;
FIG. 4 is a flowchart of a file migration process;
FIG. 5 is a diagram which shows a content of a text format information file;
FIG. 6 is a diagram which shows a display example of a browser screen;
FIG. 7 is a diagram which shows an example in which EXIF information is displayed;
FIG. 8 is a flowchart of a storage method reselecting process;
FIG. 9 is a flowchart of an information file generation process; and
FIG. 10 is a flowchart of a USB print process.

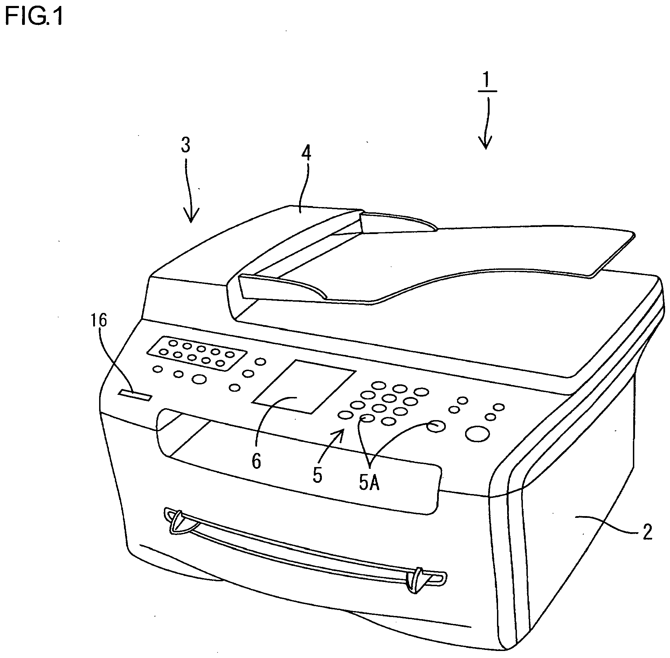

An aspect of the present invention will be described with reference to FIGS. 1 to 10.

### 1. External configuration of a multifunction apparatus

As the present aspect, there is shown an example in which the present invention is applied to a multifunction apparatus 1 (an example of a data processor) having various functions such as a scanner function, a printer function, a copy function, a facsimile function, and the like. FIG. 1 is an external perspective view of the multifunction apparatus 1.

As shown in FIG. 1, the multifunction apparatus 1 is provided with a reading portion 3 (an example of acquiring portion) for reading an original on an upper part of a main body 2. This reading portion 3 is of a so-called flatbed type, which reads an original placed on an original reading surface (not shown) by an image sensor such as a CIS (not shown) so as to acquire and output image data corresponding to an image of the original. Above the original reading surface, an ADF (automatic document feeder) 4 is provided such that it can be opened and closed with respect to the original reading surface. The ADF 4 conveys a set original into a position where the original can be read by the image sensor.

On the front of the upper part of the multifunction apparatus 1, there are provided an operation part 5 (an example of selecting portion and/or specifying portion) having a plurality of buttons 5A, a display portion 6 composed of a liquid crystal display, and a USB interface 16 (an example of memory connection portion).

### 2. Electric structure of the multifunction apparatus

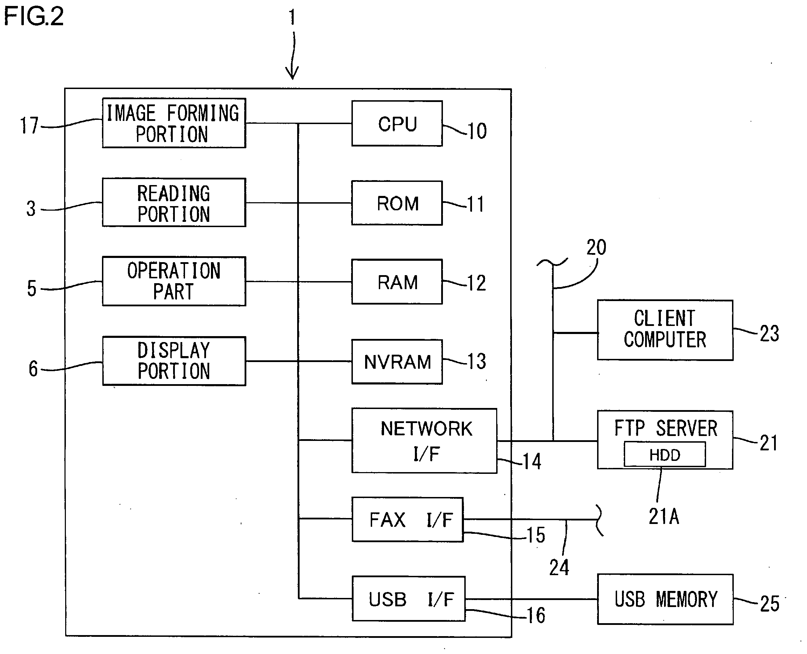

FIG. 2 is a block diagram which schematically shows an electrical structure of the multifunction apparatus 1. As shown in the figure, the multifunction apparatus 1 includes a CPU 10 (an example of acquiring portion, storing portion, reading-out portion, writing portion, control portion, and switching portion), a ROM 11, a RAM 12, an NVRAM 13, a network interface 14 (an example of connection portion and sending/receiving portion), a facsimile interface 15, and the USB interface 16, wherein an image forming portion 17 (an example of image forming portion), the foregoing reading portion 3, operation part 5, display portion 6, and the like are connected to them.

In the ROM 11, various programs for controlling operation of the multifunction apparatus 1 are stored. The CPU 10 controls various parts according to the programs read out from the ROM 11 while storing processing result thereof in the RAM 12 or the NVRAM 13.

The network interface 14 is connected to an FTP server 21 (an example of an information processor) which includes a hard disk drive 21A (an example of the memorizing portion) having a storage capacity sufficiently larger than that of a USB memory 25 to be described later, a client computer 23, and the like, through a communication line 20. The facsimile interface 15 is connected to a telephone line 24. The USB memory 25 (an example of a memory) or the like is removably connected to the USB interface 16. The image forming portion 17 forms an image based on image data onto a medium for recording such as a paper sheet, plastic sheet, or the like.

### 3. Scanning process

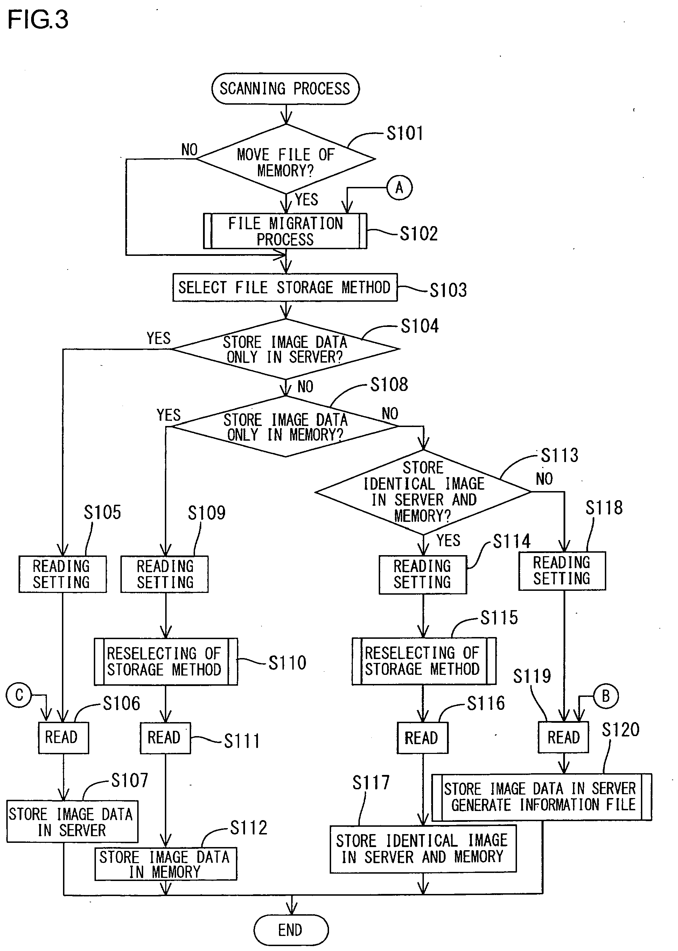

A scanning process executed under control of the CPU 10 will next be described. FIG. 3 is a flowchart of the scanning process. This scanning process is started as follows: a user places an original on the original reading surface of the reading portion 3 or the ADF 4, and inputs an instruction to start scanning by the operation part 5 in a condition that the USB memory 25 is connected to the USB interface 16.

Upon starting the scanning process, the CPU 10 displays a screen for the user to select whether or not to move a file (data) stored in the USB memory 25 on the display portion 6 (S101). Then, if a selection to move a file of the USB memory 25 is inputted from the operation part 5 (S101: Yes), the CPU 10 performs a file migration process as described below (S102).

### (File migration process)

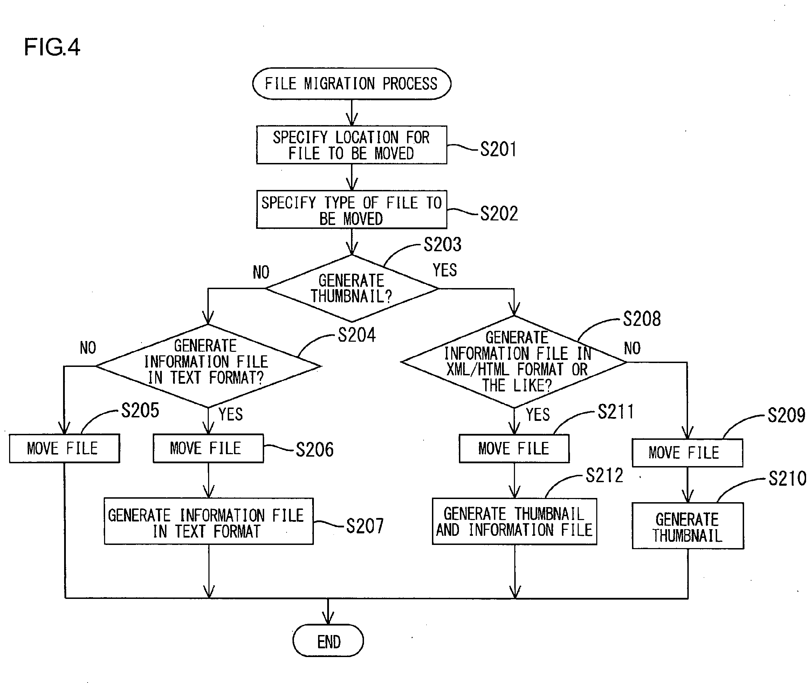

FIG. 4 is a flowchart of the file migration process. Upon starting the file migration process, as shown in the figure, the CPU 10 displays on the display portion 6 a screen for the user to specify a location in which a target file to be moved is stored (S201). Then, the user can specify a location in which the file is stored for each folder by input from the operation part 5. Further, the user may specify the whole of the USB memory 25 (all folders under a root directory).

Subsequently, the CPU 10 displays a screen for the user to specify a type of a target file to be moved on the display portion 6 (S202). Then, the user can specify, by input from the operation part 5, whether or not a file having a certain file format such as image data or audio data is a target to be moved and whether or not a file having any other file format is a target to be moved. Accordingly, from among files stored in the location specified in S201, all of files corresponding to the file format specified here become targets to be moved. Alternatively, in processing of S201 and S202, individual files may be specified one by one as a target to be moved.

Then, the CPU 10 displays on the display portion 6 a screen for selecting whether or not to generate an icon (an optional small-sized image which is registered in association with a file so that it can be used for identifying the file) of the file to be moved or a thumbnail (reduced image) of an image and write it in the USB memory 25 (S203). If it is selected that a thumbnail is not generated through the operation part 5 (S203: No), the user is made to select whether or not to generate an information file which contains information about the file to be moved in text format (S204). Then, if it is selected that an information file is not generated (S204: No), movement of the target file to be moved is performed (S205). Specifically, the CPU 10 takes the target file to be moved into the RAM 12 once, and then stores the file in a preset folder such as in the hard disk drive 21A of the FTP server 21, and deletes the file from the USB memory 25. Additionally, the user may specify a storage destination arbitrarily for moving the file. After completing the movement of the file including the deletion of the file from the USB memory 25, the CPU 10 completes the file migration process.

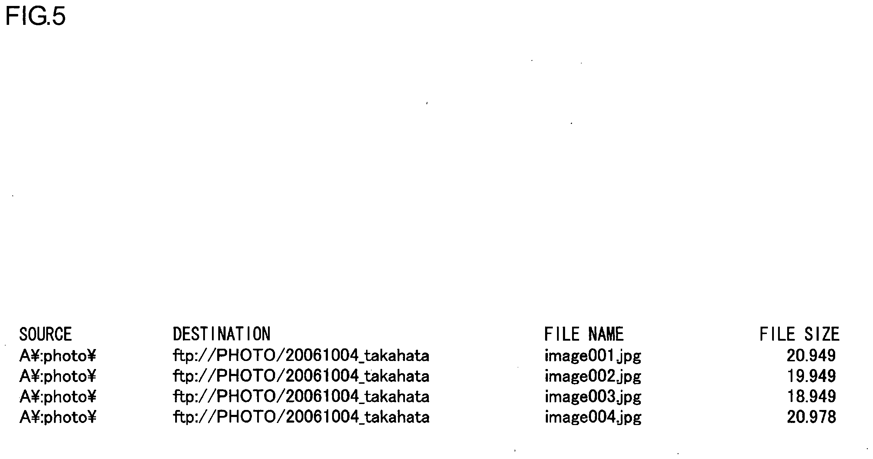

In S204, if it is selected that an information file is generated in text format through the operation part 5 (S204: Yes), movement of the target file to be moved is firstly performed as in S205 (S206). Then, an information file in text format is generated, and this information file is written in a specified location (for example, a top directory) of the USB memory 25 (S207), and then the file migration process is completed. As shown in FIG. 5, an information file contains information, for example, a file name, a source address, a destination address (an example of storage location information), and a file size with respect to each of moved file. Contents of this information file may be referenced using an application for viewing a text format file, for example, when the USB memory 25 is connected to the client computer 23 by the user afterward. In addition, the information file may contain, for example, creation date and time and other information of a moved file. In addition, when the information file is image data, the file may contain image information such as a resolution, a color number, and an image size.

In S203, if it is selected that a thumbnail is generated through the operation part 5 (S203: Yes), the CPU 10 displays on the display portion 6 a screen for selecting whether or not to generate an information file in any of XML/HTML, EXIF, and text formats (S208) . If it is selected that an information file is not generated through the operation part 5 (S208: No), the CPU 10 performs movement of the target file to be moved (S209), and then generates thumbnail data (JPEG format) of the moved file and writes the thumbnail data in the USB memory 25 (S210). At this time, in the case where the moved file is image data, thumbnail data based on the image data is generated, and in the case where the moved file is in a format other than that, thumbnail data based on an icon image of the file is generated.

In S208, if it is selected that an information file is generated in any of XML/HTML, EXIF, and text formats through the operation part 5 (S208: Yes), the CPU 10 performs movement of the target file to be moved (S211). Then, thumbnail data of the moved file and an information file in a selected format are generated and written in the USB memory 25 (S212).

In the case where a format of this generated information file is text format here, the information file contains information about thumbnail data (a file name, a storage location, a file size, and the like) corresponding to each moved file aside from various information about each moved file as previously described using FIG. 5.

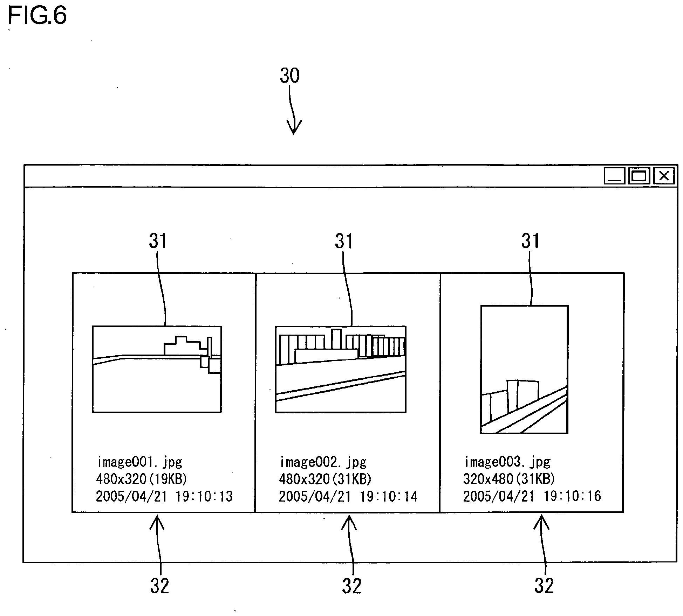

In the case where a format of the generated information file is XML/HTML format, the information file contains a tag for displaying a thumbnail image, a link tag to an original file of the thumbnail (storage location information), and various information about the original file. When the USB memory 25 is connected to another client computer 23 and the information file is opened by an application such as a Web browser, a browser screen 30, for example, shown in FIG. 6 is displayed on a display (not shown). In this browser screen 30, a thumbnail image 31 of the moved file and characters 32 which represents information about the file such as a file name, a file size, creation date and time, and an image size (if the file is image data) are correlated and displayed. Then, for example, if the thumbnail image 31 is clicked by the user, a CPU inside the client computer 23 can download original data from its storage destination referring to link information included in the tag, and display an image based on the data on the display or print the data by transmitting it to the multifunction apparatus 1 or another printer.

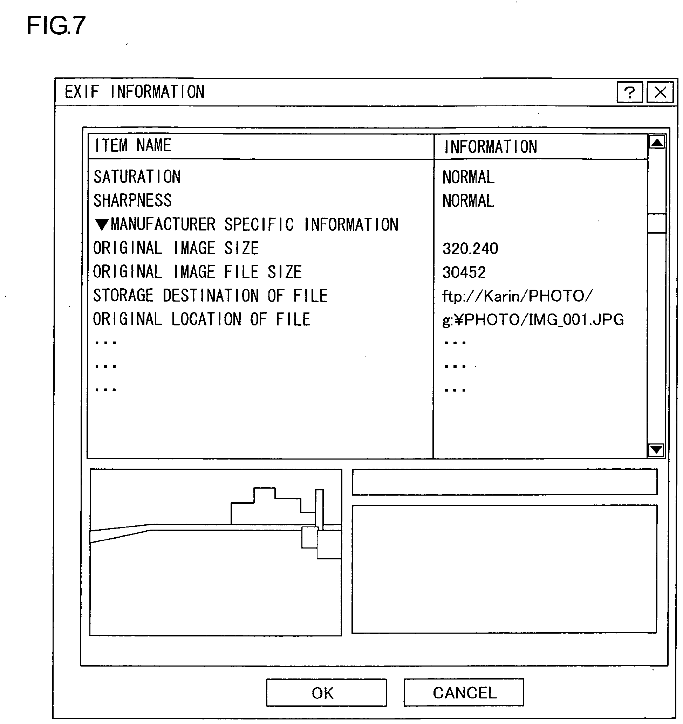

In the case where a format of the generated information file is EXIF format, information about the original file is incorporated in the thumbnail file in JPEG format along an EXIF (Exchangeable Image File Format) standard (thus, the thumbnail file and the information file are the same file). When the USB memory 25 is connected to another client computer 23, the information file (EXIF information) incorporated in the thumbnail file can be referenced using a predetermined application. FIG. 7 shows an example in which EXIF information is displayed on the display of the client computer 23. In this example, items of manufacturer specific information includes information such as a size of an original file, a storage destination address, an address before movement, and an image size (if the file is image data).

After the thumbnail data and the information file are generated and written in the USB memory 25 as described above, the CPU 10 completes the file migration process. A free space of the USB memory 25 can be ensured by performing the file migration process in this way.

Now, in the scanning process shown in FIG. 3, if the file migration process of S102 is completed or if it is selected that a file is not moved in S101 (S101: No), the CPU 10 displays a screen for selecting a storage method of image data on the display portion 6 (S103). Then, the user can select whether to store the image data in either one of the USB memory 25 and the FTP server 21 or to store the image data in both of them, by input from the operation part 5. Alternatively, the user may specify a folder for storing the image data arbitrarily in the USB memory 25 or the hard disk drive 21A of the FTP server 21. The CPU 10 switches a storage destination of the image data according to the user's selection as described in the following.

If only the FTP server 21 is selected as a storage destination of the image data (S104: Yes), then a screen for performing reading setting is displayed on the display portion 6 (S105). Then, various setting values (an example of a reading condition) such as an image quality (resolution) and a color number (monochrome/color and gradation) for reading, and a file format of image data are inputted by the user using the operation part 5 (an example of reading setting portion).

Then, the CPU 10 reads an original by the reading portion 3 based on the inputted setting values, and applies a predetermined image processing to the image data acquired from the reading portion 3 into the RAM 12 so as to generate an image data file (S106). Then, the CPU 10 stores the image data in the hard disk drive 21A of the FTP server 21 (S107), and completes the scanning process.

If only the USB memory 25 is selected as a storage destination of the image data in S103, the process proceeds to No in S104 and then proceeds to Yes in S108, and reading setting similar as previously described (in S105) is performed (S109), and then a process of reselecting a storage method is performed as described below (S110).

### (Storage method reselecting process)

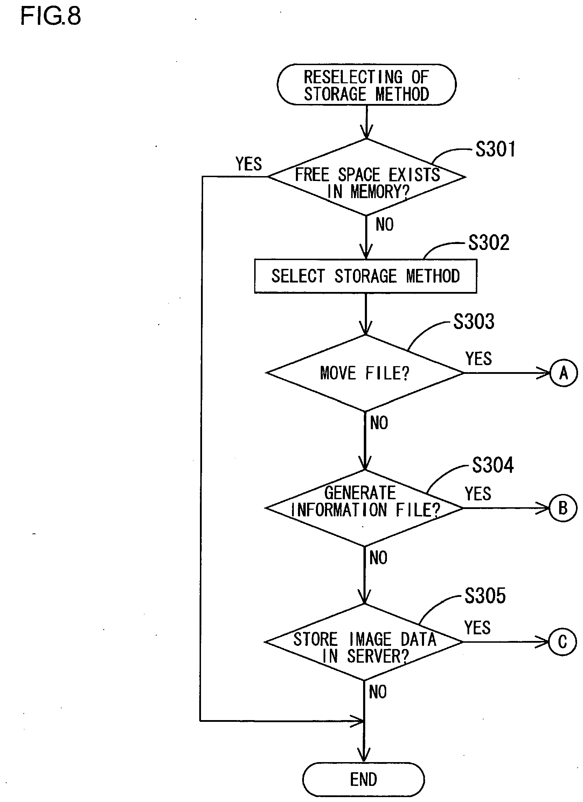

FIG. 8 is a flowchart of the storage method reselecting process. In this storage method reselecting process, a storage destination of image data is switched depending on a free space of the USB memory 25 and a selection by a user.

First, The CPU 10 compares a free space of the USB memory 25 with a predetermined threshold value. If the free space is greater than or equal to the threshold value (specified amount) (S301: Yes), the CPU 10 terminates the storage method reselecting process and reads an original by the reading portion 3 (S111 in FIG. 3), and stores obtained image data in the USB memory 25 (S112). Alternatively, in the processing of S301 in FIG. 8, it may be configured that a file size of image data is predicted based on reading conditions such as setting values (resolution, color number, file format) inputted by reading setting of S109 in FIG. 3, and, if the image data is considered to be highly likely to be normally stored in the USB memory 25 by comparing the predicted data size with a free space, Yes is determined in S301, and reading is performed (S111 in FIG. 3).

On the other hand, if the free space of the USB memory 25 is less than the threshold value (specified amount) (S301: No), then the CPU 10 displays a screen for reselecting a storage method of image data on the display portion 6 (S302). One option can be selected here from the following four options: "Move a file of the USB memory", "Store image data in the server", "Store image data in the server and write an information file in the USB memory", and "Not change a storage method".

Then, if "Move a file of the USB memory" is selected (S303: Yes), the control returns from the storage method reselecting process to S102 of FIG. 3 so that the file migration process is performed. Accordingly, storing image data in the USB memory 25 can be attempted again after a free space of the USB memory 25 is ensured. If "Store image data in the server and write an information file in the USB memory" is selected (S304: Yes), the control bypasses the storage method reselecting process to S119 of FIG. 3 in which reading is performed as described later, and the image data is stored in the FTP server 21 and an information file is written in the USB memory 25 (S120).

If "Store image data in the server" is selected (S305: Yes), the control bypasses the storage method reselecting process to S106 of FIG. 3 in which reading is performed, and then the image data is stored in the FTP server 21 (S107). If "No change of storage method" is selected (S305: No), the storage method reselecting process is terminated, and reading is performed in S111 of FIG. 3, and the obtained image data is stored in the USB memory 25 (S112). When a space of the USB memory 25 is insufficient, only a part of the obtained image data is stored. For example, in a case of image data composed of a plurality of pages, image data having some of the pages which can be stored is generated and stored in the USB memory 25.

In S103, if both the FTP server 21 and the USB memory 25 are selected as storage destinations of image data (S108: No), then the CPU 10 displays (on the display portion 6) a screen for selecting whether or not to store identical image data in both the FTP server 21 and the USB memory 25 (S113). Then, if it is selected that identical image data is stored in both the FTP server 21 and the USB memory 25 (S113: Yes), reading setting is performed (S114), and the user is made to input various setting values.

Then, the CPU 10 performs the storage method reselecting process (see FIG. 8) which is similar as previously described in S110 (S115). Thus, if a free space of the USB memory 25 is less than the threshold value (S301: No), a storage method can be reselected. If the free space of the USB memory 25 is greater than or equal to the threshold value (S301: Yes), or if "No change of storage method" is selected in S302, the storage method reselecting process is terminated and the control proceeds to S116 of FIG. 3 in which an original is read, and the obtained image data is stored in both the FTP server 21 and the USB memory 25 (S117) . When the space of the USB memory 25 is insufficient here, only a part of the obtained image data is stored in the USB memory 25.

Then, in S113, if it is selected that identical image data is stored in not both of the FTP server 21 and the USB memory 25 (S113: No), the CPU 10 performs reading setting (S118), and then performs reading of the original based on the inputted setting value (S119). Then, the CPU 110 performs an information file generation process (S120), and then completes the scanning process.

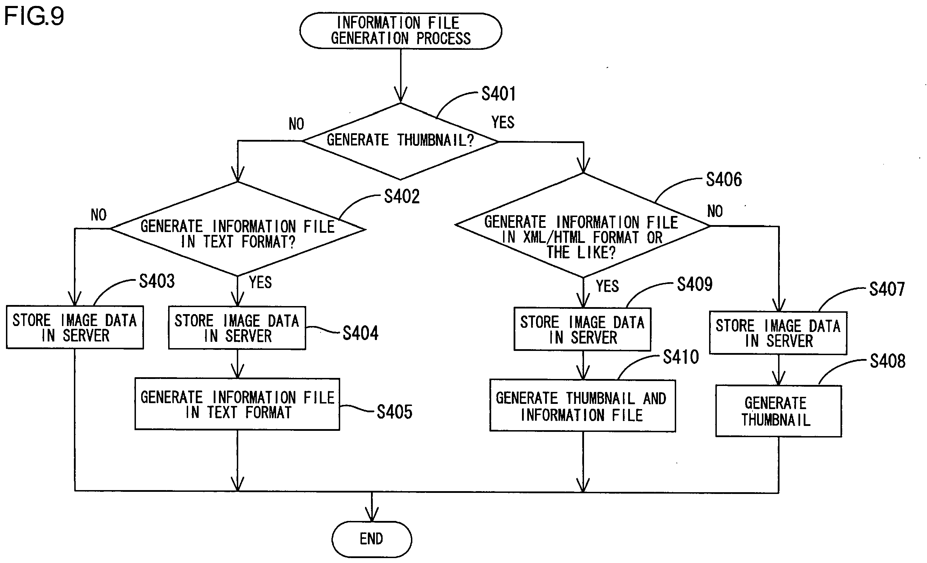

FIG. 9 is a flowchart of the information file generation process. This information file generation process (S401 to S410) corresponds to the latter part of the file migration process (S203 to S212) in FIG. 4. While, in the file migration process, data acquired from the USB memory 25 is moved to the FTP server 21 (S205, S206, S209, S211), this information file generation process is different in that data acquired from the reading portion 3 is stored in the FTP server 21 (S403, S404, S407, S409). The other part of the process is substantially the same as that of the file migration process. By this process, image data can be stored in the FTP server 21, and thumbnail data of the image data and an information file containing information about the image data can be written in the USB memory 25.

### 4. USB print process

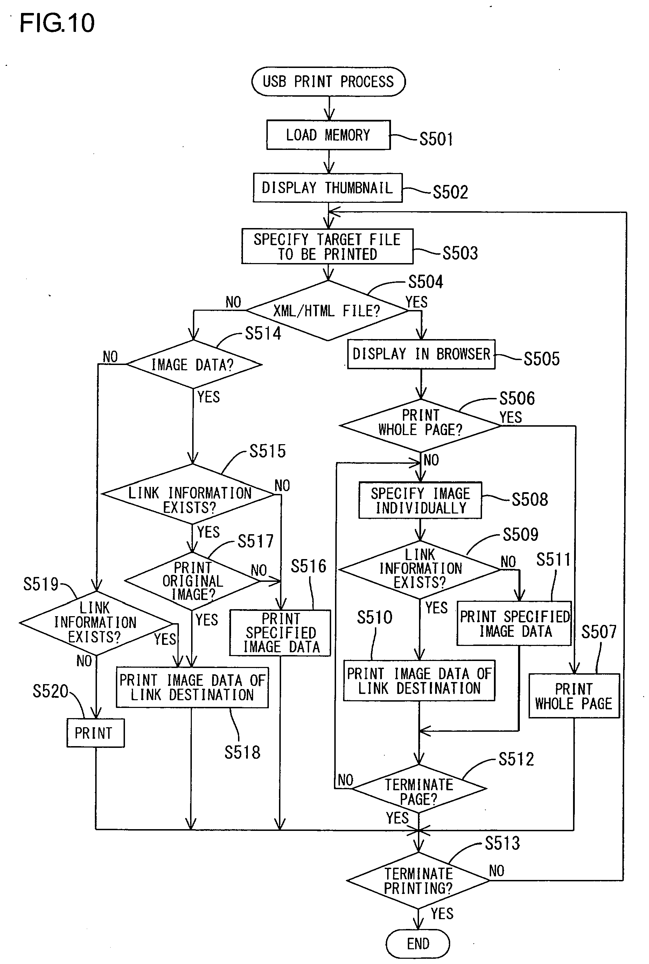

Next, a USB print process which performs printing based on various files (data) stored in the USB memory 25 will be described. FIG. 10 is a flowchart of the USB print process.

The CPU 10 starts this USB print process when it is detected that the USB memory 25 is attached to the USB interface 16 or when a predetermined instruction is inputted from the operation part 5 in a state where the USB memory 25 has already been attached to the USB interface 16. Upon starting the USB print process, the CPU 10 loads files stored in the USB memory 25 into the RAM 12 (S501).

Then, the CPU 10 generates thumbnail data of each loaded file, and displays one or more thumbnail images for every loaded file in a list view on the display portion 6 (S502). For instance, when the file is image data, a thumbnail image of the image is displayed. When the file is in XML/HTML format, its tag structure is analyzed, and then, if only an image of desired image data is to be displayed (characters and so on are not displayed) according to the structure, only a thumbnail image of the desired image data is displayed. If the tag structure of the file includes a page structure for displaying characters and so on aside from an image, a thumbnail image of a relevant image to be displayed in a browser (an image displayed when the file is opened by an application such as a Web browser or the like) is displayed. Further, when the loaded file is text data or other data, an icon image of the file is displayed as a thumbnail on the display portion 6.

Then, the CPU 10 has a user specify a target file to be printed (S503). At this time, the user can specify a target file to be printed by the operation part 5 (an example of thumbnail selecting portion) with reference to a list view of files as thumbnails on the display portion 6. Alternatively, for example, it may be configured that only a list of file names are displayed and then a content of a file specified by the user is displayed as a thumbnail or the like.

Then, if the file specified as the print target is in XML/HTML format (S504: Yes), the CPU 10 displays a content of the file in the browser on the display portion 6 (S505), and then displays a screen for the user to select whether or not to print a whole page on the display portion 6 (S506) . If there is an input from the operation part 5 indicating that a whole page is printed (S506: Yes), data of a display image in the browser of the file is sent to the image forming portion 17 and printed (S507).

If there is an input indicating that a whole page is not printed (S506: No), the user is made to specify target images to be printed individually on the display image of the browser on the display portion 6 (S508). Then, if there is link information (storage location information) to original image data with respect to a file of the specified image (to be stored in the USB memory 25) (S509: Yes), image data of a link destination (in the FTP server 21 or the like) is acquired based on the link information, and the acquired image data is sent to the image forming portion 17 and printed (S510). Alternatively, link information may be acquired from a tag contained in an XML/HTML format file, link information contained in an image file as EXIF information may be acquired, or link information contained in another file such as text format information file may be acquired.

If there is no link information (S509: No), data of the image specified as a print target is sent to the image forming portion 17 and printed (S511). After the image data is printed in S510 or S511, a screen for selecting whether or not to finish printing of images contained in the page is displayed on the display portion 6 (S512). Then, if there is an input indicating that printing is not terminated (S512: No), the process returns to S508 and continues printing of the images contained in the page.

If there is an input indicating that printing of images contained in the page is terminated (S512: Yes), or if printing of the whole page is completed in S507, a screen for confirming completion of printing is displayed on the display portion 6 (S513). If there is an input indicating that printing is not terminated here (S513: No), the process returns to S503 and have a user select a further target file to be printed again. If there is an input indicating that printing is terminated (S513: Yes), the USB print process is completed.

If the file specified as a print target in S503 is not in XML/HTML format (S504: No) but is image data (S514: Yes), the CPU 10 checks whether link information to an original image of the image data exists or not (S515). As previously described, such link information may be acquired as information contained as EXIF information in the image data itself, or may be acquired from a different information file such as in XML/HTML format or text format.

If there is no link information to the original image (S515: No), the file specified as a print target is printed by the image forming portion 17 (S516) and the process proceeds to S513. If there is link information to the original image (S515: Yes), a screen for the user to select whether or not to perform printing based on the original image on the display portion 6 (S517). Then, if there is an input indicating that printing based on the original image is not performed from the user (S517: No), the process proceeds to S516 in which the file specified as the print target is printed. In addition, if there is an input indicating that printing based on the original image data is performed (S517: Yes), image data is acquired from a link destination based on the link information and printed by the image forming portion 17 (S518). After that, the process proceeds to S513.

If the file specified as a print target in S503 is not image data but is text file (S514: No), the CPU 10 determines whether or not link information to an original image exists in the text file (S519). Then, if there is link information to the original image (S519: Yes), the process proceeds to S518 in which image data is acquired from a link destination based on the link information and printed by the image forming portion 17. If there is no link information to an original image in the text file (S519: No), the text data is sent to the image forming portion 17 and printed (S520), and the process proceeds to S513.

As described above, according to the present aspect, acquired data is stored in the FTP server 21, and storage location information indicating a storage destination of the data is written in the USB memory 25. Thereby, a used space of the USB memory 25 can be reduced. In addition, data can be easily obtained by referring to storage location information written in the USB memory 25.

Further, storage location information of image data and thumbnail data are associated and written in the USB memory 25. Thus, image data can be easily identified by referring to a thumbnail displayed on the display portion according to thumbnail data.

Further, image data corresponding to storage location information is acquired from the hard disk drive 21A of the FTP server 21 and printed by referring to storage location information of the USB memory 25. Thereby, printing of image data can be easily performed.

Further, image data acquired by reading an original by the reading portion 3 is stored in the hard disk drive 21A of the FTP server 21, and storage location information of the image data is written in the USB memory 25. Thus, image data can be easily obtained by referring to storage location information of the USB memory 25.

Further, usage can be switched depending on situations, for example, between that image data is stored in either one of the USB memory and the FTP server 21 and that identical image data is stored in both of them.

Further, if a free space of the USB memory 25 is greater than or equal to a specified amount, image data is stored in the USB memory 25. If it is less than the specified amount, the image data is stored in the FTP server 21. Thereby, image data is stored in the USB memory 25 when a free space of the USB memory 25 is sufficient, so that acquisition of image data is facilitated thus improving usability.

Further, a file size of data is compared with a free space of the USB memory 25 so that whether or not the data can be stored in the USB memory 25 can be properly determined.

Further, a user is allowed to select a storage destination of data, thus improving usability.

Further, a free space of the USB memory 25 can be increased by moving data stored in the USB memory 25 into the FTP server 21.

Further, data to be moved from the USB memory 25 can be specified, thus improving usability.

Further, by writing storage location information after movement of data from the USB memory 25 is completed, a problem that storage location of data cannot be found is prevented such as in a case where a storage destination of the data is changed due to an error during movement of the data.

Data is stored in the hard disk drive 21A of the external FTP server 21 so that a great amount of data can be stored.

Further, a desired thumbnail data is selected from thumbnail data displayed on the display portion. Then, according to location information associated with the relevant thumbnail data, the data is read out and image-formation of the data is performed. Thereby, selection of data and image formation can be easily performed.

Further, a file size of data acquired by the acquiring portion is predicted from a set reading condition, and the predicted file sized is compared with a free space of the memory. According to this comparison result, switching of storage destinations is performed. Thereby, since switching of storage destinations is performed according to a comparison result between a file size and a free space of the memory, a storage destination can be properly determined thus improving usability.

Further, data is stored in the memorizing portion and location information of the data is written in the memory. Thereby, a used space of the memory can be reduced. Further, data can be easily obtained by referring to location information written in the memory.

Further, image data corresponding to location information of the memory is acquired from the memorizing portion to perform image formation. Thereby, image formation based on acquired data can be easily performed.

Further, since the memorizing portion is mounted in a data processor, an error caused by a communication failure or the like can be handled in a preferable manner.

Further, a storage destination is selected depending on a right given to a user, thus improving usability.

Further, when acquired data is image data, thumbnail data is generated from the image data, and, when acquired data is not image data, thumbnail data is generated from an icon image. Therefore, usability is improved.

In the above described aspect, an example in which the present invention is applied to the multifunction apparatus is illustrated. However, the present invention may be applied to a data processor which does not have a printer function, a copy function, and a facsimile function. Further, the present invention can be applied to even a data processor having no scanner function if the data processor is configured to acquire data from a memory.

When a storage destination of image data acquired by reading an original is determined, a limitation may be imposed such that a storage destination of the image data is determined to be only a server, only an internal memory of the data processor, or both of the server and the memory depending on a predetermined selection condition such as a time zone of execution, a right of a user, or a status of communication with the server. Thereby, security can be improved. Additionally, selecting portion may be provided which automatically determines a storage destination of image to be only the internal memory when it is detected that communication with the server cannot be performed due to a server failure, a communication failure, or the like. Thereby, an accident that read image data cannot be obtained is prevented.

In the above described aspect, an example in which a USB memory is used as a removable memory is illustrated. However, the removable memory is not limited to this, and a different type of flash memory or a recording medium may be used.

Although a storage destination of data is a server in the above described aspect, the storage destination is not limited to this, and data may be stored in a different type of information processor or the like. In addition, memorizing portion for storing data may be provided in the main body of the data processor. Furthermore, memorizing portion may be provided in both of the server and the data processor in a way that there is provided a storage destination selecting portion (operation part or the like) for manually selecting a storage destination of data from both of the storing portion or the storage destination selecting portion (CPU) for automatically selecting a storage destination of data from both of the storing portion.

Although information file is in XML/HTML format, EXIF format, or text format in the above described aspect, the information file is not limited to them and may be generated in a different format.

## Claims

1. A data processor, comprising:
a memory connection portion communicably connectable to a removable memory (25);
a connection portion communicably connectable to a memorizing portion (21A);
an acquiring portion (3) capable of acquiring data, wherein the acquiring portion (3) acquires data of an image by reading an original;
a storing portion capable of storing the data acquired by the acquiring portion in the memorizing portion (21A); and
a writing portion capable of writing storage location information of the data stored by the storing portion in the removable memory (25), and wherein the writing portion can store data acquired by the acquiring portion (3) in the removable memory (25),
**characterized by**
a switching portion capable of switching if the data acquired by the acquiring portion (3) is stored in the memory (25) by the writing portion and if the data acquired by the acquiring portion (3) is stored in the memorizing portion (21A) by the storing portion; and
a condition setting portion capable of setting a reading condition on which the acquiring portion (3) reads an original,
wherein the switching portion predicts a file size of data acquired by the acquiring portion (3) on the set reading condition, compares the predicted file size with a free space of the memory (25), and performs the switching according to a result of the comparison, and
wherein the storage location information includes a destination address.

2. The data processor according to claim 1,
wherein the acquiring portion (3) acquires data of an image; and
the writing portion associates and writes storage location information of the data of the image and thumbnail data corresponding to the data in the memory (25).

3. The data processor according to claim 2, wherein the memory (25) stores a plurality of storage location information associated with a plurality of thumbnail data, the data processor comprising:
a display portion (6) which displays the plurality of thumbnail data;
a thumbnail selecting portion capable of selecting desired thumbnail data from the displayed plurality of thumbnail data;
a reading-out portion capable of reading out data from the memorizing portion (21A) according to the storage location information associated with the selected thumbnail data; and
a image forming portion (17) capable of forming an image according to the read-out data.

4. The data processor according to claim 1 or 2, comprising:
an image forming portion (17) capable of forming an image on a medium for recording; and
a control portion capable of acquiring data corresponding to the storage location information written in the memory (25) from the memorizing portion (21A) and causing the image forming portion (17) to form an image based on the data.

5. The data processor according to any one of claims 1 to 4, wherein the acquiring portion (3) acquires data of an image by reading an original.

6. The data processor according to any one of claims 1 to 5, wherein, after data acquired by the acquiring portion (3) is stored in the memorizing portion (21A) by the storing portion, the writing portion writes storage location information of the data in the memory (25).

7. The data processor according to any one of claims 1 to 6, wherein the connection portion is connectable to an information processor through a communication line and wherein the memorizing portion (21A) is provided in the information processor.

8. The data processor according to claim 1, wherein the storage location information has an EXIF format and the link information is described in an EXIF area of the thumbnail file.

9. The data processor according to claim 1, wherein the storage location information has an HTML format and includes a tag and a link tag, and the acquired data stored in the memorizing portion is downloaded by a simple operation of thumbnail click.

## Patentansprüche

1. Datenprozessor, aufweisend:
einen Speicherverbindungsabschnitt, der kommunikationsfähig mit einem abnehmbaren Speicher (25) verbindbar ist;
einen Verbindungsabschnitt, der kommunikationsfähig mit einem Merkabschnitt (21A) verbindbar ist;
einen Erfassungsabschnitt (3), der in der Lage ist, Daten abzurufen, wobei der Erfassungsabschnitt (3) Daten eines Bildes durch Lesen eines Originals erfasst;
einen Speicherabschnitt, der in der Lage ist, die vom Erfassungsabschnitt erfassten Daten im Merkabschnitt (21A) zu speichern; und
einen Schreibabschnitt, der in der Lage ist, Speicherortinformationen über die Daten, die vom Speicherabschnitt gespeichert werden, in den abnehmbaren Speicher zu schreiben, und wobei der Schreibabschnitt (25) Daten, die vom Erfassungsabschnitt (3) erfasst werden, im abnehmbaren Speicher (25) speichern kann,
**gekennzeichnet durch**
einen Schaltabschnitt, der in der Lage ist, umzuschalten, wenn die vom Erfassungsabschnitt (3) erfassten Daten im Speicher (25) durch den Schreibabschnitt gespeichert werden, und wenn die vom Erfassungsabschnitt (3) erfassten Daten im Merkabschnitt (21A) durch den Speicherabschnitt gespeichert werden; und
einen Bedingungseinstellabschnitt, der in der Lage ist, eine Lesebedingung, unter welcher der Erfassungsabschnitt (3) ein Original liest, einzustellen,
wobei der Schaltabschnitt eine Dateigröße von Daten, die vom Erfassungsabschnitt (3) unter der eingestellten Lesebedingung erfasst werden, voraussagt, die vorausgesagte Dateigröße mit einem freien Platz des Speichers (25) vergleicht und das Umschalten gemäß einem Ergebnis des Vergleichs durchführt, und
wobei die Speicherortinformationen eine Zieladresse beinhalten.

2. Datenprozessor nach Anspruch 1,
wobei der Erfassungsabschnitt (3) Daten eines Bildes erfasst; und
der Schreibabschnitt Speicherortinformationen über die Daten des Bildes mit Vorschaubilddaten, die den Daten im Speicher (25) entsprechen, assoziiert und schreibt.

3. Datenprozessor nach Anspruch 2, wobei der Speicher (25) eine Mehrzahl von Speicherortinformationen, die mit einer Mehrzahl von Vorschaubilddaten assoziiert sind, speichert, wobei der Datenprozessor aufweist:
einen Anzeigeabschnitt (6), der die Mehrzahl von Vorschaubilddaten anzeigt;
einen Vorschaubildauswahlabschnitt, der in der Lage ist, ausgewählte gewünschte Vorschaubilddaten aus der angezeigten Mehrzahl von Vorschaubilddaten auszuwählen;
einen Ausleseabschnitt, der in der Lage ist, Daten gemäß den Speicherortinformationen, die mit den ausgewählten Vorschaubilddaten assoziiert sind, aus dem Merkabschnitt (21A) auszulesen; und
einen Bilderzeugungsabschnitt (17), der in der Lage ist, ein Bild gemäß den ausgelesenen Daten zu erzeugen.

4. Datenprozessor nach Anspruch 1 oder 2, aufweisend:
einen Bilderzeugungsabschnitt (17), der in der Lage ist, ein Bild auf einem Medium für eine Aufzeichnung zu erzeugen; und
einen Steuerabschnitt, der in der Lage ist, Daten, die den in den Speicher (25) geschriebenen Speicherortinformationen entsprechen, aus dem Merkabschnitt (21A) abzurufen und zu bewirken, dass der Bilderzeugungsabschnitt (17) auf Basis der Daten ein Bild erzeugt.

5. Datenprozessor nach einem der Ansprüche 1 bis 4, wobei der Erfassungsabschnitt (3) Daten eines Bildes durch Lesen eines Originals erfasst.

6. Datenprozessor nach einem der Ansprüche 1 bis 5, wobei der Schreibabschnitt nach dem Speichern von Daten, die vom Erfassungsabschnitt (3) erfasst worden sind, im Merkabschnitt (21A) Speicherortinformationen über die Daten in den Speicher (25) schreibt.

7. Datenprozessor nach einem der Ansprüche 1 bis 6, wobei der Anschlussabschnitt über eine Kommunikationsleitung mit einem Informationsprozessor verbindbar ist und wobei der Merkabschnitt (21A) im Informationsprozessor bereitgestellt ist.

8. Datenprozessor nach Anspruch 1, wobei die Speicherortinformationen ein EXIF-Format aufweisen und die Verknüpfungsinformationen in einem EXIF-Bereich der Vorschaubilddatei beschrieben sind.

9. Datenprozessor nach Anspruch 1, wobei die Speicherortinformationen ein HTML-Format haben und ein Tag und ein Verknüpfungs-Tag aufweisen, und die im Merkabschnitt gespeicherten erfassten Daten durch eine einfache Vorschaubild-Anklickoperation heruntergeladen werden.

## Revendications

1. Processeur de données, comprenant :
une partie de connexion de mémoire connectable de manière communicante à une mémoire amovible (25) ;
une partie de connexion connectable de manière communicante à une partie de mémorisation (21A) ;
une partie d'acquisition (3) capable d'acquérir des données, dans lequel la partie d'acquisition (3) acquiert des données d'une image en lisant un original ;
une partie de stockage capable de stocker les données acquises par la partie d'acquisition dans la partie de mémorisation (21A) ; et
une partie d'écriture capable d'écrire des informations d'emplacement de stockage des données stockées par la partie de stockage dans la mémoire amovible (25), et dans lequel la partie d'écriture peut stocker des données acquises par la partie d'acquisition (3) dans la mémoire amovible (25),
**caractérisé par**
une partie de commutation capable de commuter si les données acquises par la partie d'acquisition (3) sont stockées dans la mémoire (25) par la partie d'écriture et si les données acquises par la partie d'acquisition (3) sont stockées dans la partie de mémorisation (21A) par la partie de stockage ; et
une partie d'établissement de condition capable d'établir une condition de lecture à laquelle la partie d'acquisition (3) lit un original,
dans lequel la partie de commutation prédit une taille de fichier de données acquises par la partie d'acquisition (3) à la condition de lecture établie, compare la taille de fichier prédite avec un espace libre de la mémoire (25), et effectue la commutation en fonction d'un résultat de la comparaison, et
dans lequel les informations d'emplacement de stockage incluent une adresse de destination.

2. Processeur de données selon la revendication 1,
dans lequel la partie d'acquisition (3) acquiert des données d'une image ; et
la partie d'écriture associe et écrit des informations d'emplacement de stockage des données de l'image et des données de miniature correspondant aux données dans la mémoire (25).

3. Processeur de données selon la revendication 2, dans lequel la mémoire (25) stocke une pluralité d'informations d'emplacement de stockage associées à une pluralité de données de miniature, le processeur de données comprenant :
une partie d'affichage (6) qui affiche la pluralité de données de miniature ;
une partie de sélection de miniature capable de sélectionner des données de miniature souhaitées parmi la pluralité de données de miniature affichée ;
une partie de sortie en lecture capable de sortir en lecture des données de la partie de mémorisation (21A) en fonction des informations d'emplacement de stockage associées aux données de miniature sélectionnées ; et
une partie de formation d'image (17) capable de former une image en fonction des données sorties en lecture.

4. Processeur de données selon la revendication 1 ou 2, comprenant :
une partie de formation d'image (17) capable de former une image sur un support pour l'enregistrement ; et
une partie de commande capable d'acquérir des données correspondant aux informations d'emplacement de stockage écrites dans la mémoire (25) à partir de la partie de mémorisation (21A) et d'amener la partie de formation d'image (17) à former une image sur la base des données.

5. Processeur de données selon l'une quelconque des revendications 1 à 4, dans lequel la partie d'acquisition (3) acquiert des données d'une image en lisant un original.

6. Processeur de données selon l'une quelconque des revendications 1 à 5, dans lequel, après que des données acquises par la partie d'acquisition (3) ont été stockées dans la partie de mémorisation (21A) par la partie de stockage, la partie d'écriture écrit des informations d'emplacement de stockage des données dans la mémoire (25).

7. Processeur de données selon l'une quelconque des revendications 1 à 6, dans lequel la partie de connexion est connectable à un processeur d'informations à travers une ligne de communication et dans lequel la partie de mémorisation (21A) est fournie dans le processeur d'informations.

8. Processeur de données selon la revendication 1, dans lequel les informations d'emplacement de stockage ont un format EXIF et les informations de lien sont décrites dans une zone EXIF du fichier de miniature.

9. Processeur de données selon la revendication 1, dans lequel les informations d'emplacement de stockage ont un format HTML et incluent une balise et une balise de lien, et les données acquises stockées dans la partie de mémorisation sont téléchargées par une simple opération de clic sur miniature.
